(19) **Europäisches Patentamt / European Patent Office / Office européen des brevets**

(11) **EP 2 294 875 B1**

(12) **FASCICULE DE BREVET EUROPEEN**

(45) Date de publication et mention
de la délivrance du brevet:
**22.02.2012 Bulletin 2012/08**

(21) Numéro de dépôt: **09761886.2**

(22) Date de dépôt: **05.05.2009**

(51) Int Cl.:
*H04W 52/00* (2009.01)

(86) Numéro de dépôt international:
**PCT/FR2009/050829**

(87) Numéro de publication internationale:
**WO 2009/150335 (17.12.2009 Gazette 2009/51)**

(54) **TECHNIQUE D'EMISSION PAR UN NOEUD D'UN RESEAU DE COMMUNICATION**

TECHNIK ZUM AUSSTRAHLEN ÜBER EINEN KOMMUNIKATIONSNETZKNOTEN

TECHNIQUE FOR BROADCASTING VIA A COMMUNICATION NETWORK NODE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.05.2008 FR 0853162**

(43) Date de publication de la demande:
**16.03.2011 Bulletin 2011/11**

(73) Titulaire: **France Telecom**
**75015 Paris (FR)**

(72) Inventeurs:
• **IBRAHIM, Ali**
**F-92170 Vanves (FR)**
• **MUSCARIELLO, Luca**
**F-75005 Paris (FR)**
• **ROBERTS, James**
**F-78960 Voisins Le Bretonneux (FR)**

(74) Mandataire: **Lecomte, Isabelle**
**France Telecom**
**PIV / Brevets**
**38-40, rue du Général Leclerc**
**F-92794 Issy les Moulineaux Cedex 9 (FR)**

(56) Documents cités:
**WO-A-97/25787        FR-A- 2 799 322**
**US-A1- 2006 146 916**

## Description

L'invention concerne une technique d'émission par un noeud d'un réseau de communication, dans lequel des noeuds communiquent entre eux par l'intermédiaire d'un canal à accès multiple avec écoute de porteuse.

L'invention concerne également une technique de réception par un noeud d'un réseau de communication, dans un tel réseau.

Un tel réseau de communication est par exemple un réseau sans fil de type IEEE 802.11.

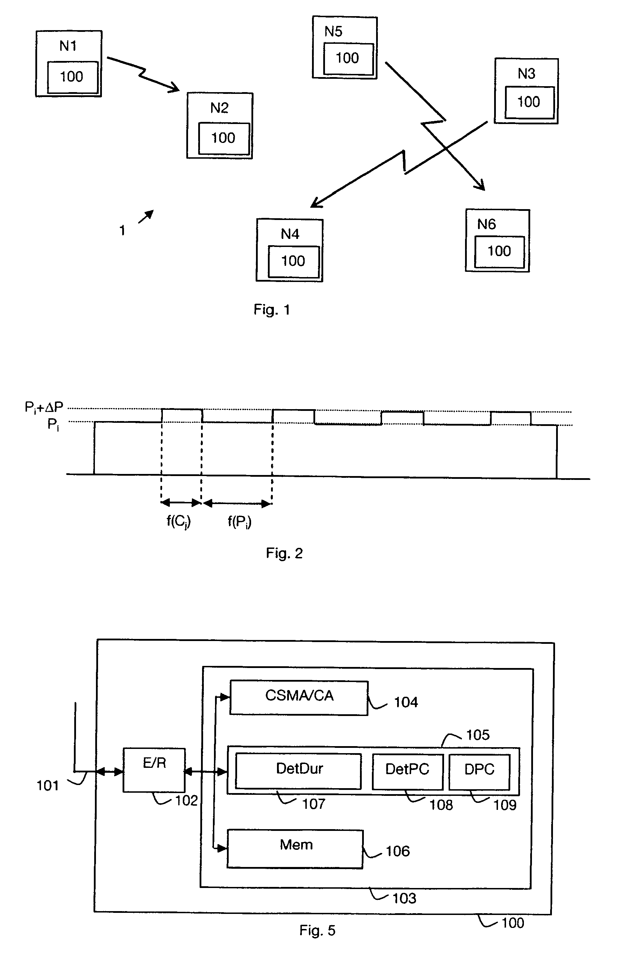

Considérons par exemple un réseau de communication tel que celui représenté sur la figure 1. Un noeud N1 transmet des données à un noeud N2, un noeud N3 à un noeud N4, et un noeud N5 à un noeud N6. Ces différentes transmissions utilisent le canal à accès multiple, un noeud émettant lorsque le canal est libre.

Afin de résoudre les problèmes d'accès simultanés au canal, un mécanisme de résolution de contention a été défini. Le noeud voulant émettre, appelée noeud source, mesure un niveau d'interférence sur le canal. Si le canal est considéré comme occupé, la transmission est différée. Dans le cas contraire, si le canal est libre pendant un temps prédéterminé, appelé DIFS pour "Distributed Inter Frame Space", alors le noeud source peut émettre. Le noeud source transmet un premier message RTS, pour "Ready To Send", contenant des informations sur le volume des données qu'il souhaite émettre et son débit de transmission. Le noeud récepteur répond un deuxième message CTS, pour "Clear To Send", puis le noeud source commence l'émission des données. Les noeuds s'ils souhaitent émettre également, situés dans les zones de couverture respectives des noeuds source et récepteur patientent alors pendant un temps nécessaire à la transmission des données à la vitesse annoncée.

A réception de toutes les données émises par le noeud source, le noeud récepteur envoie un accusé de réception, noté ACK.

Afin d'augmenter la capacité d'un tel réseau en permettant une réutilisation spatiale plus importante du canal, il est préférable de mettre en place des mécanismes de contrôle de puissance. La puissance d'émission du noeud source est alors adaptée à un niveau de puissance permettant une réception correcte des données au noeud récepteur. Toutefois, un débit de transmission donné est caractérisé par un seuil de rapport signal à interférence. Si la puissance d'émission est diminuée, le débit d'émission choisi n'est peut être pas possible. Il est ainsi nécessaire de choisir conjointement une puissance et un débit d'émission.

L'article de T-S Kim et al, publié dans les actes de la conférence MobiCom'06, qui s'est tenue en septembre 2006 et intitulé "Improving Spatial Reuse through Tuning Transmit Power, Carrier Sense Threshold, and Data rate in Multihop Wireless Networks", propose un tel mécanisme de contrôle de puissance et de débit. Dans cet algorithme, un noeud source détermine dans une première étape un niveau de puissance maximal ne perturbant pas une communication en cours, en fonction d'un niveau d'interférence mesuré et du seuil d'écoute de porteuse. Puis, dans une deuxième étape, le noeud source détermine le niveau maximum de rapport signal à interférence, qui peut être obtenu au noeud récepteur avec le niveau de puissance maximal déterminé à la première étape. Ceci nécessite la transmission par le noeud récepteur au noeud source d'un niveau d'interférence perçu. Puis, dans une troisième étape, le noeud source sélectionne un débit $C_i$ tel qu'un seuil de rapport signal à bruit associé à ce débit soit inférieur au niveau maximum de rapport signal à interférence et un seuil de rapport signal à bruit associé au débit immédiatement supérieur soit supérieur à ce dernier. On détermine ensuite un niveau de puissance en fonction du seuil de rapport signal à bruit associé à ce débit sélectionné.

Cette méthode présente les inconvénients suivants. Elle repose sur des modèles de propagation particuliers qui ne reflètent certainement pas les modèles de propagation réels. Lors de la première étape, le niveau de puissance maximal est déterminé dans le pire cas. Cette première étape se base sur l'hypothèse d'un seul noeud transmetteur concurrent. Elle repose en outre sur la transmission par le noeud récepteur du niveau d'interférence mesuré ce qui nécessite des échanges d'information entre les noeuds source et récepteur préalablement à la transmission effective des données.

Il existe donc un besoin d'une technique permettant de mettre en oeuvre un contrôle d'une puissance et d'un débit d'émission en prenant en compte un ensemble de noeuds émetteurs concurrents.

L'invention répond à ce besoin en proposant un procédé d'émission par un noeud d'un réseau de communication, dans lequel des noeuds communiquent entre eux par l'intermédiaire d'un canal à accès multiple avec écoute de porteuse, ledit procédé comprenant :

- une étape d'émission d'un signal à une puissance d'émission et un débit donnés sur le canal à destination d'un noeud récepteur ;

caractérisé en ce que la puissance d'émission du signal émis prend successivement une première valeur de puissance pendant une première durée puis une deuxième valeur de puissance pendant une deuxième durée, les deux valeurs de puissance étant différentes et l'une d'elles étant égale à la puissance donnée, la première durée étant représentative de la puissance donnée et la deuxième durée étant représentative du débit.

Ainsi, le niveau du signal émis à une puissance d'émission et à un débit donnés est modulé selon un schéma déterminé, par alternance de deux durées et porte implicitement les informations de puissance et de débit. Il n'est pas nécessaire d'utiliser des messages de signalisation explicites pour transmettre ces informations.

En outre, le procédé d'émission comprend une étape de détermination de la puissance et du débit donnés en fonction de noeuds en cours d'émission, de puissances d'émission respectives desdits noeuds et d'atténuations liées à la propagation d'un signal entre des noeuds du réseau.

Le niveau de puissance d'émission et le débit sont déterminés en fonction des noeuds en cours d'émission, de leurs puissances d'émission respectives et d'atténuations liées à la propagation du signal. Ainsi, le procédé d'émission prend en compte l'ensemble des noeuds en cours d'émission et les milieux spécifiques modifiant la propagation du signal entre les différents noeuds. Il est donc particulièrement bien adapté pour réaliser du contrôle de puissance et de débit dans un réseau de communication, permettant une réutilisation spatiale plus importante du canal à accès multiple.

De plus, le procédé d'émission met en oeuvre avant l'étape d'émission sur le canal :

- une étape de détermination d'un niveau d'interférence attendu en fonction des noeuds en cours d'émission ;
- une étape de mesure d'un niveau d'interférence courant sur ledit canal ;

et dans lequel l'étape d'émission est effectuée si la différence entre le niveau d'interférence attendu et le niveau d'interférence courant est inférieure à un seuil prédéterminé.

Le noeud émetteur maintient une liste de noeuds en cours d'émission et peut ainsi déterminer un niveau d'interférence attendu. Cette liste comprend l'ensemble des noeuds en cours d'émission et ne se restreint pas à un seul noeud transmetteur concurrent virtuel. Si le niveau mesuré est supérieur au niveau d'interférence attendu, alors un noeud non identifié est en train d'émettre sur le canal et il n'est donc pas possible de prendre le canal pour émettre. Dans le cas contraire, les noeuds en cours d'émission sont bien identifiés et il est alors possible d'émettre à un niveau de puissance adapté.

L'invention répond également à ce besoin en proposant un procédé de réception par un noeud d'un réseau de communication, dans lequel des noeuds communiquent entre eux par l'intermédiaire d'un canal à accès multiple avec écoute de porteuse, ledit procédé comprenant :

- une étape de réception d'un signal émis à une puissance d'émission et un débit donnés sur le canal en provenance d'un noeud émetteur, la puissance d'émission prenant successivement une première valeur de puissance pendant une première durée puis une deuxième valeur de puissance pendant une deuxième durée, les deux valeurs de puissance étant différentes ;
- une étape de détermination à partir du signal reçu des première et deuxième durées ;
- une étape de détermination de la puissance d'émission et du débit utilisés par le noeud émetteur à partir des deux durées déterminées.

Le procédé de réception est particulièrement adapté à la réception d'un signal émis selon le procédé d'émission décrit ci-dessus, c'est-à-dire un signal présentant des paliers de puissance selon un schéma prédéterminé, le signal portant implicitement des informations représentatives de la puissance d'émission et du débit utilisés. Ainsi, par la détermination d'une première durée d'un premier niveau de puissance et d'une deuxième durée d'un deuxième niveau de puissance, il est possible de déduire la puissance et le débit utilisés à l'émission.

De plus, le procédé de réception comprend une étape de détermination du noeud émetteur en fonction d'une différence entre les première et deuxième puissances et d'une atténuation liée à la propagation du signal entre le noeud du réseau et les autres noeuds du réseau.

La variation apportée au niveau de puissance étant prédéterminée, il est possible pour le noeud récepteur de déterminer le noeud émetteur en fonction de l'atténuation apportée au signal lors de la propagation du noeud émetteur au noeud destinataire. Ainsi, le noeud récepteur a une connaissance fine des noeuds en cours d'émission.

En outre, le procédé de réception comprend une étape de décodage d'un acquittement envoyé par le noeud destinataire du signal vers le noeud émetteur et une étape de détermination d'une atténuation liée à la propagation du signal entre le noeud du réseau et le noeud destinataire.

Le décodage du message d'acquittement permet ainsi au noeud récepteur de déterminer le noeud destinataire et l'atténuation liée à la propagation du signal entre le noeud destinataire et le noeud récepteur. Ainsi, on n'utilise pas un modèle de propagation prédéterminé et fixe mais on utilise une atténuation adaptée au modèle de propagation effectif.

L'invention concerne également un module d'émission d'un noeud d'un réseau de communication, dans lequel des noeuds communiquent entre eux par l'intermédiaire d'un canal à accès multiple avec écoute de porteuse, ledit dispositif comprenant :

- des moyens d'émission d'un signal à une puissance d'émission et un débit donnés sur le canal à destination d'un noeud récepteur,

caractérisé en ce que les moyens d'émission sont adaptés pour faire varier la puissance d'émission du signal émis successivement entre une première valeur de puissance pendant une première durée et une deuxième valeur de puissance pendant une deuxième durée, les deux valeurs de puissance étant différentes et l'une d'elles étant égale à la puissance donnée, la première durée étant représentative de la puissance donnée et la deuxième durée étant représentative du débit..

L'invention concerne également un module de réception d'un noeud d'un réseau de communication, dans lequel des noeuds communiquent entre eux par l'intermédiaire d'un canal à accès multiple avec écoute de porteuse, ledit dispositif comprenant :

- des moyens de réception d'un signal émis à une puissance d'émission et un débit donnés sur le canal en provenance d'un noeud émetteur, la puissance d'émission prenant successivement une première valeur de puissance pendant une première durée puis une deuxième valeur de puissance pendant une deuxième durée, les deux valeurs de puissance étant différentes ;
- des moyens de détermination à partir du signal reçu des première et deuxième durées ;
- des moyens de détermination d'une puissance d'émission et d'un débit utilisés par le noeud émetteur à partir des deux durées déterminées.

L'invention concerne également un noeud émetteur d'un réseau de communication, dans lequel des noeuds communiquent entre eux par l'intermédiaire d'un canal à accès multiple avec écoute de porteuse, comprenant un module d'émission tel que décrit précédemment.

L'invention concerne également un noeud récepteur d'un réseau de communication, dans lequel des noeuds communiquent entre eux par l'intermédiaire d'un canal à accès multiple avec écoute de porteuse, comprenant un module de réception tel que décrit précédemment.

L'invention concerne également un système de communication dans lequel des noeuds communiquent entre eux par l'intermédiaire d'un canal à accès multiple avec écoute de porteuse, comprenant au moins un noeud émetteur et au moins un noeud récepteur tels que décrits précédemment.

L'invention concerne également un programme d'ordinateur comportant des instructions pour la mise en oeuvre du procédé d'émission par un noeud d'un réseau de communication, dans lequel des noeuds communiquent entre eux par l'intermédiaire d'un canal à accès multiple avec écoute de porteuse, tel que décrit précédemment lorsque ce programme est exécuté par un processeur.

L'invention concerne également un programme d'ordinateur comportant des instructions pour la mise en oeuvre du procédé de réception par un noeud d'un réseau de communication, dans lequel des noeuds communiquent entre eux par l'intermédiaire d'un canal à accès multiple avec écoute de porteuse, tel que décrit précédemment lorsque ce programme est exécuté par un processeur.

L'invention concerne également un signal émis par un noeud d'un réseau de communication, dans lequel des noeuds communiquent entre eux par l'intermédiaire d'un canal à accès multiple avec écoute de porteuse, le dit signal étant émis à une puissance d'émission et un débit donnés sur le canal à destination d'un noeud récepteur ; caractérisé en ce que la puissance d'émission du signal émis prend successivement une première valeur de puissance pendant une première durée puis une deuxième valeur de puissance pendant une deuxième durée, les deux valeurs de puissance étant différentes et l'une d'elles étant égale à la puissance donnée, la première durée étant représentative de la puissance donnée et la deuxième durée étant représentative du débit.

L'invention sera mieux comprise à l'aide de la description suivante d'un mode de réalisation particulier des procédés de l'invention, en référence aux dessins annexés sur lesquels :

- la figure 1 représente une architecture d'un réseau de communication ;
- la figure 2 représente un signal émis par un noeud du réseau de communication selon un mode particulier de réalisation de l'invention ;
- la figure 3 représente les étapes du procédé d'émission selon un mode particulier de réalisation de l'invention ;
- la figure 4a représente une première partie des étapes du procédé de réception selon un mode particulier de réalisation de l'invention ;
- la figure 4b représente une deuxième partie des étapes du procédé de réception selon un mode particulier de réalisation de l'invention ;
- la figure 5 représente un module d'accès au réseau de communication selon un mode particulier de réalisation de l'invention.

Sur la figure 1, déjà commentée, est représenté un réseau de communication 1. Un noeud N1 transmet des données à un noeud N2, un noeud N3 à un noeud N4, et un noeud N5 à un noeud N6. Ces différentes transmissions utilisent le canal à accès multiple, un noeud émettant lorsque le canal est libre. Un tel réseau de communication est par exemple un réseau sans fil de type IEEE 802.11. Les noeuds peuvent être des ordinateurs personnels comprenant un module d'accès 100 à un réseau sans fil de type IEEE 802.11. Ils peuvent également être des téléphones mobiles, des points d'accès sans fil. On se place par la suite dans le cas d'un réseau sans fil de type IEEE 802.11.

On suppose par la suite qu'un noeud émet à un niveau de puissance sélectionné dans un ensemble de valeurs discrètes allant d'une valeur $P_{min}$ à une valeur $P_{max}$ noté par la suite $P_i$, i appartenant à l'intervalle 1 à M. La valeur $P_{max}$ est définie dans la norme IEEE 802.11. Le noeud émet également à un débit sélectionné dans un ensemble de valeurs discrètes allant d'une valeur $C_1$ à $C_L$, cet ensemble de valeurs étant défini dans la norme IEEE 802.11.

Selon l'invention, lorsqu'un noeud émet des données à une puissance d'émission $P_i$ et un débit $C_j$ donnés, il module le niveau de puissance selon un schéma prédéterminé et tel que représenté à la figure 2. Le schéma prédéterminé comprend une succession de périodes d'émission. Une période d'émission comprend une première durée représentative de la puissance d'émission, notée $f(P_i)$, suivie d'une deuxième durée représentative du débit utilisé, notée $f(C_j)$. Ces première et deuxième durées sont par exemple de l'ordre de quelques microsecondes. Pendant la première durée d'émission, le signal est émis une première puissance d'émission égale à la puissance d'émission donnée $P_i$. Puis, pendant la deuxième durée d'émission, le signal est émis à une deuxième puissance d'émission ayant un rapport prédéterminé avec la puissance donnée, notée $P_i+\Delta P$. Le rapport prédéterminé est indépendant de la puissance d'émission donnée $P_i$. On peut par exemple le choisir de l'ordre de dix pourcents par rapport à la puissance d'émission maximale $P_{max}$. Lorsqu'un noeud a accès au canal afin d'émettre et tant que l'émission n'est pas terminée, il répète ainsi la période d'émission. Un noeud détectant le signal émis sur le canal à accès multiple observe ainsi des variations de puissance de niveaux sensiblement égaux et peut en déduire à partir de ces observations la puissance d'émission et le débit appliqués par le noeud émetteur. Il n'est donc pas nécessaire d'utiliser des messages de signalisation explicites pour transmettre ces informations.

A titre d'exemple, on peut choisir pour la première durée représentative de la puissance d'émission $f(P_i)$, $f(P_i) = iT_p$ et pour la deuxième durée représentative du débit $f(C_j)$, $f(C_j) = jT_c$, où $T_p$ et $T_c$ sont des durées prédéterminées et connues des noeuds du réseau de communication.

Par la suite, on appelle V l'ensemble des noeuds du réseau de communication dont les signaux émis sont susceptibles d'être détectés par le noeud N1, c'est-à-dire supérieur à un niveau de sensibilité de celui-ci.

Chaque noeud administre une liste courante de noeuds en cours d'émission, notée CT. Dans l'exemple particulier de la figure 1, pour le noeud N1, cette liste comprend par exemple les noeuds N3 et N5. A chaque noeud de la liste est associée une puissance d'émission.

Chaque noeud N administre également un vecteur d'atténuations, noté $(R_{s,N})_{s\epsilon V}$, comprenant des atténuations liées à la propagation d'un signal entre les différents noeuds du réseau de communication et lui-même.

Chaque noeud N administre également une matrice d'atténuations Z, notée $(Z_{s,u})_{(s,u)\epsilon V}$ comprenant des atténuations liées à la propagation d'un signal entre les noeuds de l'ensemble V pris deux à deux. Le vecteur d'atténuations $(R_{s,N})_{s\epsilon V}$ correspond à une ligne de la matrice d'atténuation $(Z_{s,u})_{(s,u)\epsilon V}$.

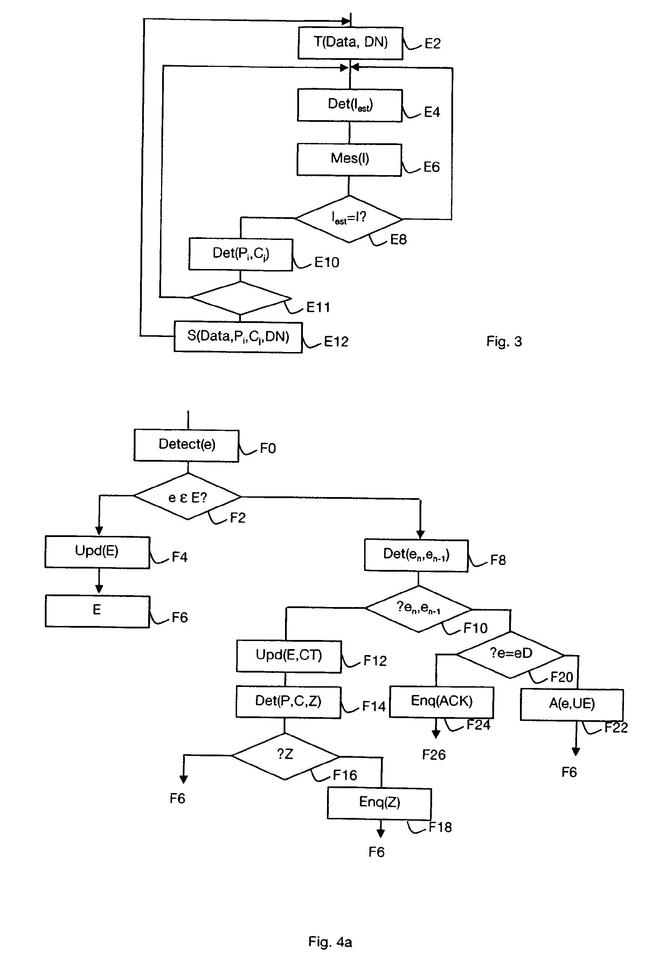

Le procédé d'émission tel qu'il est mis en oeuvre par un noeud N1 du réseau de communication, appelé par la suite noeud émetteur, va maintenant être décrit en relation avec la figure 3.

Dans une étape E2, notée "T(Data,DN)" sur la figure 3, le noeud N1 détecte que des données sont à transmettre à un noeud destinataire DN, c'est-à-dire le noeud N2 dans l'exemple de la figure 1.

Dans une étape E4 de détermination d'un niveau d'interférence attendu, notée "Det($I_{est}$)" sur la figure 3, le noeud N1 détermine un niveau d'interférence attendu en fonction de la liste courante CT des noeuds en cours d'émission, de leurs puissances d'émission respectives P et du vecteur $(R_{s,N1})_{s\epsilon V}$ d'atténuations liées à la propagation d'un signal entre le noeud émetteur et les noeuds du réseau de communication de l'ensemble V. Plus précisément, on détermine $I_{est}$ de la manière suivante:

$$I_{est} = \sum_{s \in CT} P_s R_{s,N1}$$

Dans une étape E6 de mesure d'un niveau d'interférence, notée "Mes(I)" sur la figure 3, le noeud N1 mesure un niveau d'interférence sur le canal à accès multiple.

Dans une étape E8 de test, le noeud N1 compare le niveau d'interférence estimé $I_{est}$ à l'étape E4 avec le niveau d'interférence mesuré I à l'étape E6.

Si les niveaux d'interférence ne sont pas sensiblement égaux, c'est-à-dire que la différence entre les deux niveaux d'interférence est supérieure à un seuil prédéterminé, par exemple de l'ordre de grandeur de cinq pourcents, le noeud N1 n'a pas correctement identifié les noeuds en cours d'émission et la liste courante des noeuds en cours d'émission CT n'est donc pas correcte. Un paramètre Etat du canal passe alors à l'état "Occupé" et le procédé d'émission retourne à l'étape E4.

Dans une variante, le noeud N1 n'effectue pas de nouveau l'étape E4 tant que la liste courante des noeuds en cours d'émission n'a pas été modifiée par le procédé de réception. Ceci permet d'optimiser le procédé d'émission en n'effectuant l'étape E4 uniquement lorsque cela est nécessaire, c'est-à-dire lorsque l'environnement radio a été modifié.

Si les niveaux d'interférence sont sensiblement égaux, c'est-à-dire que la différence entre les deux niveaux d'interférence est inférieure au seuil prédéterminé, le noeud N1 a correctement identifié les noeuds en cours d'émission et la liste courante des noeuds en cours d'émission CT est correcte. Le paramètre Etat du canal passe alors à l'état "Libre".

Lors d'une étape E10 de détermination d'une puissance d'émission et d'un débit, notée "Det($P_i$,$C_i$)" sur la figure 3, le noeud N1 détermine un niveau de puissance d'émission $P_i$ et un débit $C_i$, de façon à ne pas perturber les transmissions en cours, tout restant à un niveau acceptable de réception pour le noeud destinataire N2.

Plus précisément, dans une première sous-étape à l'étape E10, le noeud N1 détermine pour chaque noeud s de la liste courante CT des noeuds en cours d'émission, appelé noeud évalué, une marge d'interférence, c'est-à-dire la puissance maximum que peut utiliser le noeud émetteur N1 sans créer de collision au niveau du noeud évalué. Cette marge d'interférence, notée $MI_s$, est déterminée à partir de la puissance d'émission et du débit du noeud évalué, de la matrice d'atténuations $(Z_{s,u})_{(s,u)\varepsilon V}$ liées à la propagation d'un signal entre les noeuds de l'ensemble V pris deux à deux.

$$MI_s = \frac{1}{Z_{N1,r_s}} [\frac{Z_{t_s,r_s}P(t_s)}{SINRTH_{C(t_s)}} - (N + \sum_{j \neq s} Z_{t_j,r_s}(P(t_j) + \Delta P))]$$

où s est le noeud évalué, $t_s$ l'émetteur du noeud s, $r_s$ le récepteur du noeud s et $SINRTH_C$ le seuil de rapport signal à bruit associé au débit C.

Dans une deuxième sous-étape à l'étape E10, le noeud N1 détermine l'interférence MI produite par les noeuds de la liste courante des noeuds en cours d'émission au niveau du noeud destinataire N2 :

$$MI = \sum_{s \in CT} (P_s + \Delta P)Z_{s,N_2}$$

Dans une troisième sous-étape à l'étape E10, le noeud N1 détermine la puissance d'émission la plus grande $P_{hp}$, telle que, lorsqu'elle est augmentée de la valeur $\Delta P$, elle est supérieure à la plus petite des valeurs $MI_s$ déterminées lors de la première sous-étape de l'étape E10.

Puis, dans une quatrième sous-étape à l'étape E10, le noeud N1 détermine :

-   le niveau maximum de rapport signal à bruit au niveau du noeud récepteur N2 :

$$SINR_{rN2} = \frac{P_{hp}Z_{t_{N2},r_{N2}}}{MI + N}$$

où N prend une valeur prédéterminée et représente le niveau de bruit thermique sur le canal,

-   puis, un débit $C_i$ tel que le seuil de rapport signal à bruit associé à ce débit est immédiatement inférieur au rapport signal à bruit déterminé ci-dessus.

Dans une étape E11 de test, le noeud N1 détermine si la valeur de débit déterminée est nulle ou si la valeur de puissance déterminée est nulle. Si tel est le cas, il n'est pas possible d'émettre. Le paramètre Etat du canal passe à la valeur "occupé" et le procédé retourne à l'étape E4.

Dans la variante, le noeud N1 n'effectue pas de nouveau l'étape E4 tant que la liste courante des noeuds en cours d'émission n'a pas été modifiée par le procédé de réception afin d'optimiser le procédé d'émission.

Si les valeurs de débit et de puissance déterminées ne sont pas nulles, on a ainsi déterminé un niveau de puissance d'émission $P_i$ et un débit $C_i$ en fonction de la liste courante CT des noeuds en cours d'émission, de leurs puissances d'émissions respectives et d'atténuations liées à la propagation des signaux entre des noeuds de l'ensemble V pris deux à deux.

Le noeud N1 émet alors les données dans une étape E12 d'émission, notée "S(data,$P_i$,$C_i$,DN)" sur la figure 3, à destination du noeud destinataire N2 à la puissance d'émission $P_i$ et au débit $C_i$ conformément au schéma prédéterminé tel que défini ci-dessus et représenté à la figure 2.

Ainsi, le procédé d'émission prend en compte l'ensemble des noeuds en cours d'émission et l'environnement spécifique susceptible d'impacter la propagation du signal entre les différents noeuds. La puissance d'émission et le débit utilisés sont définis afin de ne pas perturber les autres noeuds en cours d'émission en restant à un niveau acceptable pour le noeud destinataire. Ce contrôle de puissance et de débit permet donc une réutilisation spatiale du canal commun plus importante.

Optionnellement, lors de l'émission d'un message d'acquittement, le noeud émetteur N1 n'effectue pas les différentes étapes du procédé d'émission mais émet le signal à un niveau constant correspondant au niveau minimum d'émission $P_{min}$.

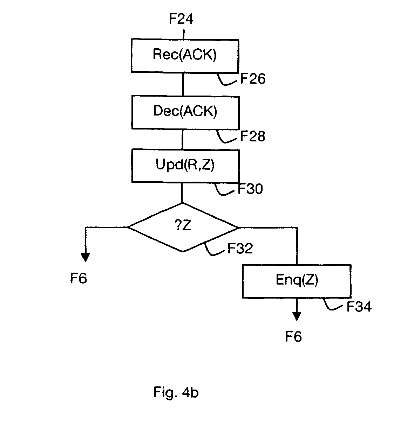

Le procédé de réception tel qu'il est mis en oeuvre par un noeud N2 du réseau de communication, appelé par la suite noeud récepteur, va maintenant être décrit en relation avec les figures 4a et 4b.

Le noeud N2 administre une liste d'évènements attendus E ainsi qu'une liste d'évènements non identifiés UE.

Dans une étape F0 de détection d'une variation de puissance, notée Detect(e) sur la figure 4a, le noeud N2 reçoit un signal sur le canal à accès multiple. Lorsqu'il détecte et mesure une variation de puissance, il mémorise un évènement e défini par la mesure de la variation de puissance observée et un instant de détection.

Par évènement, on entend par la suite une détection d'une variation de puissance sur le canal à accès multiple. En référence à la figure 2, ces évènements peuvent être liés à l'émission de données par un noeud émetteur à destination d'un noeud destinataire. On notera que les données ne sont pas à destination du noeud récepteur N2 mais d'un noeud destinataire distinct. Le noeud récepteur N2 va utiliser le signal reçu sur le canal à accès multiple, notamment les niveaux de puissance du signal reçu et les instants de détection, pour déterminer des informations relatives à l'environnement dans lequel il se trouve, en particulier la liste courante des noeuds en cours d'émission, des atténuations liées à la propagation d'un signal entre le noeud émetteur et des autres noeuds du réseau,....

Dans une étape F2 de test, le noeud N2 vérifie si l'évènement détecté e appartient à un ensemble d'évènements attendus E.

Si tel est le cas, dans une étape F4, notée "Upd(E,CT)", le noeud N2 met à jour la liste des évènements attendus et la liste courante des noeuds en cours d'émission.

Puis, le procédé passe à une étape F6 en attente de détection d'un nouvel évènement.

Si l'évènement e n'appartient pas à la liste des évènements attendus E, dans une étape F8 de détermination d'évènements, notée "Det($e_n$,$e_{n-1}$)" sur la figure 4a, le noeud N2 détermine s'il existe deux évènements précédents $e_n$ et $e_{n-1}$ auxquels des mesures de variation de puissance sensiblement égales à celle observée pour l'évènement e sont associées. Par sensiblement égales, on entend des mesures de variation de puissance d'un ordre de grandeur équivalent, par exemple se différenciant au maximum de cinq pourcents.

Dans une étape F10, le noeud N2 teste si deux évènements $e_n$ et $e_{n-1}$ ont été déterminés.

Si c'est le cas, les évènements e, $e_n$ et $e_{n-1}$ sont associés à une même transmission de données par un noeud émetteur. On a ainsi déterminé trois variations de puissance de valeurs respectives sensiblement égales. Il s'agit alors de la réception d'un signal émis par le procédé d'émission précédemment décrit.

Dans une étape F12 de mise à jour, notée "Upd(E,CT)" sur la figure 4a, le noeud N2 détermine à partir de la variation de puissance observée le noeud émetteur. En effet, il connait la variation de puissance $\Delta P$ appliquée par le noeud émetteur lors de l'émission du signal et ainsi, à partir de la variation de puissance observée et de l'atténuation liée à la propagation d'un signal entre un noeud de l'ensemble V et le noeud récepteur, il identifie le noeud émetteur. Il ajoute alors à la liste courante CT des noeuds en cours d'émission le noeud émetteur identifié. Il met également à jour au cours de cette étape F12 la liste d'évènements attendus E. Par exemple, si l'évènement e correspond à une variation de puissance positive, l'évènement attendu correspondant est une variation de puissance négative de niveau équivalent.

Puis, le noeud N2 détermine, dans une étape F14 de détermination d'une puissance d'émission et d'un débit utilisés, noté "Det(P,C,Z)" sur la figure 4a, à partir des instants associés à ces variations, la puissance d'émission P et le débit C. L'écart temporel entre l'évènement $e_{n-1}$ et l'évènement $e_n$ permet par exemple de déterminer une première durée égale à f(C) et donc le débit C et l'écart temporel entre l'évènement $e_n$ et e permet par exemple de déterminer une deuxième durée f(P) et donc la puissance P.

Dans une étape F16 de test, le noeud N2 vérifie si une ligne de la matrice Z ne contient pas d'information. Il s'agit par exemple d'un noeud qui vient de se joindre à l'ensemble des noeuds dans la zone définie par la sensibilité du noeud récepteur. S'il existe une telle ligne, le noeud N2 demande explicitement, dans une étape F18, notée "Enq(Z)" sur la figure 4a, à ce noeud de lui transmettre ses propres mesures d'atténuations avec les autres noeuds de l'ensemble. On note qu'il s'agit d'un échange ponctuel permettant de constituer la matrice des atténuations Z.

Puis, le procédé de réception passe à l'étape F6 en attente de détection d'un événement.

Si la matrice Z ne contient pas de lignes vides, le procédé de réception passe à l'étape F6 en attente de détection d'un événement.

Si le résultat du test effectué à l'étape F10 est qu'il n'existe pas d'évènements respectant les conditions de l'étape F8, dans une étape F20, le noeud N2 vérifie si la variation de puissance observée correspond à la fin de la transmission d'un noeud émetteur appartenant à la liste courante des noeuds en cours d'émission. Connaissant la puissance utilisée par un noeud émetteur de la liste courante des noeuds en cours d'émission et l'atténuation liée à la propagation du signal entre ce noeud émetteur et le noeud récepteur, il est en effet possible de déterminer si l'évènement observé e correspond à cette variation de puissance.

S'il n'est pas possible de déterminer à l'étape F20 un noeud tel l'évènement e correspond à la fin de la transmission d'un noeud, alors dans une étape F22, notée "A(e,UE)" sur la figure 4a, le noeud N2 ajoute l'évènement e à la liste des évènements inattendus UE. Puis le procédé de réception passe à l'étape F6 en attente de détection d'un événement.

Si un noeud émetteur a pu être déterminé à l'étape F20, dans une étape F24, notée "Enq(ACK)" sur la figure 4a, le noeud N2 demande un décodage du message d'acquittement à venir, c'est-à-dire un acquittement que le noeud destinataire de la transmission va transmettre au noeud émetteur.

Puis, le noeud N2 passe à l'étape F26, notée "'Rec(ACK)" sur la figure 4b, en attente de réception du message d'acquittement.

Dans une étape F28 de décodage du message d'acquittement, notée "Dec(ACK)" sur la figure 4b, le noeud N2 décode le message d'acquittement afin d'obtenir des identifiants des noeuds émetteur et destinataire.

Puis, dans une étape F30, notée "Upd(R,Z)" sur la figure 4b, le noeud N2 détermine une atténuation entre le noeud destinataire et lui-même et met à jour le vecteur d'atténuations R et la matrice d'atténuations Z. Ainsi, on n'utilise pas un modèle de propagation prédéterminé et fixe mais on utilise une atténuation adaptée au modèle de propagation effectif.

Dans une étape F32 de test, le noeud N2 vérifie si une ligne de la matrice Z ne contient pas d'information. Il s'agit par exemple d'un noeud qui vient de se joindre à l'ensemble des noeuds dans la zone définie par la sensibilité du noeud récepteur. S'il existe une telle ligne, le noeud N2 demande explicitement, dans une étape F34, notée "Enq(Z)" sur la figure 4b, à ce noeud de lui transmettre ses mesures d'atténuations avec les autres noeuds de l'ensemble. On note qu'il s'agit d'un échange ponctuel permettant de constituer la matrice des atténuations Z.

Puis, le procédé de réception passe à l'étape F6 en attente de détection d'un événement.

Si la matrice Z ne contient pas de lignes vides, le procédé de réception passe à l'étape F6 en attente de détection d'un événement.

On notera que la description de ce mode particulier de réalisation comprend la gestion de deux listes d'évènements E et UE. Leur but est de faciliter la mise en oeuvre du procédé de réception. Il est toutefois tout à fait possible mettre en oeuvre le procédé de réception sans introduire ces listes.

On notera également qu'une date de péremption peut être associée à un évènement de la liste afin d'éviter de mémoriser des événements trop anciens.

La description des procédés a été réalisée pour un noeud comprenant un seul émetteur et un seul récepteur. Cette description est aisément transposable à des noeuds possédant plusieurs modules d'accès sans fil.

Le module d'accès 100 au réseau de communication, tel que représenté à la figure 5, comprend :

- une antenne 101,
- un module 102 d'émission à une puissance et à un débit donnés et de réception, composé d'un émetteur et d'un récepteur, notamment adapté pour faire varier la puissance d'émission du signal émis successivement entre une première valeur de puissance pendant une première durée et une deuxième valeur de puissance pendant une deuxième durée, les deux valeurs de puissance étant différentes et l'une d'elles étant égale à la puissance donnée, la première durée étant représentative de la puissance donnée et la deuxième durée étant représentative du débit et pour recevoir un tel signal,
- un module de contrôle d'accès aux ressources 103 ou module MAC, pour "Medium Access Control".

Ce module 103 de contrôle d'accès aux ressources se compose de trois modules secondaires :

- un premier module 106 agencé pour mémoriser trois paramètres une puissance d'émission $P_i$. un débit $C_j$ et un Etat du canal, "occupé" ou "libre",
- un deuxième module 104 implémentant le protocole d'accès au canal avec écoute de porteuse et esquive de collision ou CSMA/CA pour "Carrier Sense Multiple Access with Collision Avoidance" tel que défini pour les réseaux sans fil IEEE 802.11,
- un troisième module 105 mettant en oeuvre les étapes des procédés d'émission et de réception tels que définis précédemment, afin de déterminer les trois paramètres.

**EP 2 294 875 B1**

Les trois paramètres sont partagés par les deux modules 104 et 105.

Le troisième module 105 se compose de trois sous-modules :

- un sous-module 107 de détermination de durées, noté "DetDur" sur la figure 5, agencé pour déterminer à partir du signal reçu des première et deuxième durées ;
- un sous-module 108 de détermination d'une puissance d'émission et d'un débit utilisés par le noeud émetteur à partir des première et deuxième durées déterminées, noté "DetPC" sur la figure 5 ;
- un sous-module 109 de détermination d'une puissance d'émission et d'un débit à utiliser lors d'une transmission de données, noté "DPC" sur la figure 5, agencé pour déterminer une puissance et un débit à utiliser en fonction de noeuds en cours d'émission, de puissances d'émission respectives de ces noeuds et d'atténuations liées à la propagation d'un signal entre les noeuds du réseau.

Le sous-module 107 de détermination de durées est en outre agencé pour détecter une variation de puissance dans un signal reçu et y associer un instant de détection. De plus, il est agencé pour déterminer trois variations de puissance de valeurs sensiblement égales.

Le sous-module 108 est en outre agencé pour déterminer un noeud émetteur en fonction d'une différence entre les première et deuxième puissances et d'une atténuation liée à la propagation du signal entre le noeud du réseau et les autres noeuds du réseau. Il est également agencé pour décoder un message d'acquittement envoyé par le noeud destinataire du signal reçu vers le noeud émetteur et déterminer une atténuation liée à la propagation du signal entre le noeud du réseau et le noeud destinataire du signal reçu.

Le sous-module 109 est en outre agencé pour déterminer un niveau d'interférence attendu en fonction d'une liste courante de noeuds en cours d'émission et pour le comparer à un niveau d'interférence courant sur ledit canal, le paramètre Etat du canal passant à un état "libre" si la différence entre le niveau d'interférence attendu et le niveau d'interférence courant est inférieure à un seuil prédéterminé.

Les modules 102 et 109 sont agencés pour mettre en oeuvre le procédé d'émission précédemment décrit. Il s'agit de préférence de modules logiciels comprenant des instructions logicielles pour faire exécuter les étapes du procédé d'émission précédemment décrit, mises en oeuvre par un processeur d'un noeud d'un réseau de communication.

L'invention concerne donc aussi :

- un programme d'ordinateur comportant des instructions pour la mise en oeuvre du procédé d'émission tel que décrit précédemment lorsque ce programme est exécuté par un processeur ;
- un support d'enregistrement lisible par un noeud sur lequel est enregistré le programme d'ordinateur décrit ci-dessus.

Les modules 102, 107, 108 sont agencés pour mettre en oeuvre le procédé de réception précédemment décrit. Il s'agit de préférence de modules logiciels comprenant des instructions logicielles pour faire exécuter les étapes du procédé de réception précédemment décrit, mises en oeuvre par un processeur d'un noeud d'un réseau de communication.

L'invention concerne donc aussi :

- un programme d'ordinateur comportant des instructions pour la mise en oeuvre du procédé de réception tel que décrit précédemment lorsque ce programme est exécuté par un processeur ;
- un support d'enregistrement lisible par un noeud sur lequel est enregistré le programme d'ordinateur décrit ci-dessus.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Dans le mode de réalisation décrit, le module d'accès 100 au réseau de communication est agencé pour mettre en oeuvre aussi bien l'émission que la réception. On peut également envisager une réalisation comprenant des modules d'émission et de réception distincts communiquant par l'intermédiaire d'un bus interne.

Dans le mode de réalisation décrit, un noeud joue à la fois le rôle du noeud émetteur en mettant en oeuvre le procédé d'émission et le rôle du noeud récepteur en mettant en oeuvre le procédé de réception. On peut toutefois envisager que les procédés soient mis en oeuvre indépendamment l'un de l'autre.

**Revendications**

1. Procédé d'émission par un noeud (N1-N6) d'un réseau de communication (1), dans lequel des noeuds communiquent entre eux par l'intermédiaire d'un canal à accès multiple avec écoute de porteuse, ledit procédé comprenant :

- une étape (E12) d'émission d'un signal à une puissance d'émission et un débit donnés sur le canal à destination d'un noeud récepteur ;

**caractérisé en ce que** la puissance d'émission du signal émis prend successivement une première valeur de puissance pendant une première durée puis une deuxième valeur de puissance pendant une deuxième durée, les deux valeurs de puissance étant différentes et l'une d'elles étant égale à la puissance donnée, la première durée étant représentative de la puissance donnée et la deuxième durée étant représentative du débit.

2. Procédé d'émission selon la revendication 1, comprenant une étape (E10) de détermination de la puissance et du débit donnés en fonction de noeuds en cours d'émission, de puissances d'émission respectives desdits noeuds et d'atténuations liées à la propagation d'un signal entre des noeuds du réseau.

3. Procédé d'émission selon la revendication 1, comprenant avant l'étape d'émission sur le canal :

   - une étape (E4) de détermination d'un niveau d'interférence attendu en fonction des noeuds en cours d'émission ;
   - une étape (E6) de mesure d'un niveau d'interférence courant sur ledit canal ;

   et dans lequel l'étape d'émission est effectuée si la différence entre le niveau d'interférence attendu et le niveau d'interférence courant est inférieure à un seuil prédéterminé.

4. Procédé de réception par un noeuds (N1-N6) d'un réseau de communication (I), dans lequel des noeuds communiquent entre eux par l'intermédiaire d'un canal à accès multiple avec écoute de porteuse, ledit procédé comprenant :

   - une étape (F0) de réception d'un signal émis à une puissance d'émission et un débit donnés sur le canal en provenance d'un noeud émetteur, la puissance d'émission prenant successivement une première valeur de puissance pendant une première durée puis une deuxième valeur de puissance pendant une deuxième durée, les deux valeurs de puissance étant différentes ;
   - une étape (F12) de détermination à partir du signal reçu des première et deuxième durées ;
   - une étape (F14) de détermination de la puissance d'émission et du débit utilisés par le noeud émetteur à partir des deux durées déterminées.

5. Procédé de réception selon la revendication 4, comprenant en outre une étape (F12) de détermination du noeud émetteur en fonction d'une différence entre les première et deuxième puissances et d'une atténuation liée à la propagation du signal entre le noeud du réseau et les autres noeuds du réseau.

6. Procédé de réception selon la revendication 4, comprenant en outre une étape (F28) de décodage d'un acquittement envoyé par le noeud destinataire du signal vers le noeud émetteur et une étape (F30) de détermination d'une atténuation liée à la propagation du signal entre le noeud du réseau et le noeud destinataire.

7. Module (100) d'émission d'un noeud d'un réseau de communication, dans lequel des noeuds communiquent entre eux par l'intermédiaire d'un canal à accès multiple avec écoute de porteuse, ledit dispositif comprenant :

   - des moyens (102) d'émission d'un signal à une puissance d'émission et un débit donnés sur le canal à destination d'un noeud récepteur,

   **caractérisé en ce que** les moyens d'émission sont adaptés pour faire varier la puissance d'émission du signal émis successivement entre une première valeur de puissance pendant une première durée et une deuxième valeur de puissance pendant une deuxième durée, les deux valeurs de puissance étant différentes et l'une d'elles étant égale à la puissance donnée, la première durée étant représentative de la puissance donnée et la deuxième durée étant représentative du débit.

8. Module (100) de réception d'un noeud d'un réseau de communication, dans lequel des noeuds communiquent entre eux par l'intermédiaire d'un canal à accès multiple avec écoute de porteuse, ledit dispositif comprenant :

   - des moyens (102) de réception d'un signal émis à une puissance d'émission et un débit donnés sur le canal en provenance d'un noeud émetteur, la puissance d'émission prenant successivement une première valeur de puissance pendant une première durée puis une deuxième valeur de puissance pendant une deuxième durée, les deux valeurs de puissance étant différentes ;
- des moyens (107) de détermination à partir du signal reçu des première et deuxième durées ;
- des moyens (108) de détermination d'une puissance d'émission et d'un débit utilisés par le noeud émetteur à partir des deux durées déterminées.

**9.** Noeud émetteur (N1-N6) d'un réseau de communication (1), dans lequel des noeuds communiquent entre eux par l'intermédiaire d'un canal à accès multiple avec écoute de porteuse, comprenant un module d'émission selon la revendication 7.

**10.** Noeud récepteur (N1-N6) d'un réseau de communication (1), dans lequel des noeuds communiquent entre eux par l'intermédiaire d'un canal à accès multiple avec écoute de porteuse, comprenant un module de réception selon la revendication 8.

**11.** Système de communication dans lequel des noeuds communiquent entre eux par l'intermédiaire d'un canal à accès multiple avec écoute de porteuse, comprenant au moins un noeud selon la revendication 9 et au moins un noeud selon la revendication 10.

**12.** Programme d'ordinateur comportant des instructions pour la mise en oeuvre du procédé d'émission par un noeud d'un réseau de communication, dans lequel des noeuds communiquent entre eux par l'intermédiaire d'un canal à accès multiple avec écoute de porteuse, selon la revendication 1 lorsque ce programme est exécuté par un processeur.

**13.** Programme d'ordinateur comportant des instructions pour la mise en oeuvre du procédé de réception par un noeud d'un réseau de communication, dans lequel des noeuds communiquent entre eux par l'intermédiaire d'un canal à accès multiple avec écoute de porteuse, selon la revendication 4 lorsque ce programme est exécuté par un processeur.

**14.** Signal émis par un noeud d'un réseau de communication, dans lequel des noeuds communiquent entre eux par l'intermédiaire d'un canal à accès multiple avec écoute de porteuse, le dit signal étant émis à une puissance d'émission et un débit donnés sur le canal à destination d'un noeud récepteur ;
**caractérisé en ce que** la puissance d'émission du signal émis prend successivement une première valeur de puissance pendant une première durée puis une deuxième valeur de puissance pendant une deuxième durée, les deux valeurs de puissance étant différentes et l'une d'elles étant égale à la puissance donnée, la première durée étant représentative de la puissance donnée et la deuxième durée étant représentative du débit.

## Claims

**1.** Method for transmission by a node (N1-N6) of a communication network (1), in which nodes intercommunicate via a carrier-sense multiple access channel, said method comprising:

- a step (E12) for transmitting a signal with a given transmission power and bit rate over the channel to a receiving node;

**characterized in that** the transmission power of the signal transmitted successively takes a first power value for a first duration then a second power value for a second duration, the two power values being different and one of them being equal to the given power, the first duration being representative of the given power and the second duration being representative of the bit rate.

**2.** Transmission method according to Claim 1, comprising a step (E10) for determining the given power and bit rate according to nodes currently transmitting, respective transmission powers of said nodes and attenuations linked to the propagation of a signal between nodes of the network.

**3.** Transmission method according to Claim 1, comprising, before the step for transmission over the channel:

- a step (E4) for determining an anticipated interference level according to the nodes currently transmitting;
- a step (E6) for measuring a current interference level on said channel; and in which the transmission step is performed if the difference between the anticipated interference level and the current interference level is below a predetermined threshold.

4. Method for reception by a node (N1-N6) of a communication network (1), in which nodes intercommunicate via a carrier-sense multiple access channel, said method comprising:

- a step (F0) for receiving a signal transmitted with a given transmission power and bit rate over the channel from a transmitting node, the transmission power successively taking a first power value for a first duration then a second power value for a second duration, the two power values being different;
- a step (F12) for determining, based on the received signal, the first and second durations;
- a step (F14) for determining the transmission power and the bit rate used by the transmitting node based on the two determined durations.

5. Reception method according to Claim 4, also comprising a step (F12) for determining the transmitting node according to a difference between the first and second powers and an attenuation linked to the propagation of the signal between the node of the network and the other nodes of the network.

6. Reception method according to Claim 4, also comprising a step (F28) for decoding an acknowledgement sent by the recipient node of the signal to the transmitting node and a step (F30) for determining an attenuation linked to the propagation of the signal between the node of the network and the recipient node.

7. Transmission module (100) of a node of a communication network, in which nodes intercommunicate via a carrier-sense multiple access channel, said device comprising:

- means (102) for transmitting a signal with a given transmission power and bit rate over the channel to a receiving node,
**characterized in that** the transmission means are designed to vary the transmission power of the signal transmitted successively between a first power value for a first duration and a second power value for a second duration, the two power values being different and one of them being equal to the given power, the first duration being representative of the given power and the second duration being representative of the bit rate.

8. Reception module (100) of a node of a communication network, in which nodes intercommunicate via a carrier-sense multiple access channel, said device comprising:

- means (102) for receiving a signal transmitted with a given transmission power and bit rate over the channel from a transmitting node, the transmission power successively taking a first power value for a first duration then a second power value for a second duration, the two power values being different;
- means (107) for determining, on the basis of the received signal, first and second durations;
- means (108) for determining a transmission power and bit rate used by the transmitting node on the basis of the two determined durations.

9. Transmitting node (N1-N6) of a communication network (1), in which nodes intercommunicate via a carrier-sense multiple access channel, comprising a transmission module according to Claim 7.

10. Receiving node (N1-N6) of a communication network (1), in which nodes intercommunicate via a carrier-sense multiple access channel, comprising a reception module according to Claim 8.

11. Communication system in which nodes intercommunicate via a carrier-sense multiple access channel, comprising at least one node according to Claim 9 and at least one node according to Claim 10.

12. Computer program comprising instructions for implementing the method for transmission by a node of a communication network, in which nodes intercommunicate via a carrier-sense multiple access channel, according to Claim 1 when this program is executed by a processor.

13. Computer program comprising instructions for implementing the method for reception by a node of a communication network, in which nodes intercommunicate via a carrier-sense multiple access channel, according to Claim 4 when this program is executed by a processor.

14. Signal transmitted by a node of a communication network, in which nodes intercommunicate via a carrier-sense multiple access channel, said signal being transmitted with a given transmission power and bit rate over the channel to a receiving node; **characterized in that** the transmission power of the signal transmitted successively takes a first power value for a first duration then a second power value for a second duration, the two power values being different and one of them being equal to the given power, the first duration being representative of the given power and the second duration being representative of the bit rate.

**Patentansprüche**

1. Sendeverfahren über einen Knoten (N1-N6) eines Kommunikationsnetzes (1), bei dem die Knoten mittels eines Kanals mit Trägerabfrage-Mehrfachzugriff miteinander kommunizieren, wobei das Verfahren enthält:

   - einen Schritt (E12) des Sendens eines Signals mit einer gegebenen Sendeleistung und einem gegebenen Durchsatz im Kanal an einen Empfangsknoten;

   **dadurch gekennzeichnet, dass** die Sendeleistung des gesendeten Signals nacheinander einen ersten Leistungswert während einer ersten Dauer, dann einen zweiten Leistungswert während einer zweiten Dauer annimmt, wobei die zwei Leistungswerte unterschiedlich sind und einer von ihnen gleich der gegebenen Leistung ist, wobei die erste Dauer für die gegebene Leistung repräsentativ ist und wobei die zweite Dauer für den Durchsatz repräsentativ ist.

2. Sendeverfahren nach Anspruch 1, das einen Schritt (E10) der Bestimmung der gegebenen Leistung und des gegebenen Durchsatzes abhängig von gerade sendenden Knoten, von jeweiligen Sendeleistungen der Knoten und von Dämpfungen enthält, die mit der Ausbreitung eines Signals zwischen den Knoten des Netzes verbunden sind.

3. Sendeverfahren nach Anspruch 1, das vor dem Schritt des Sendens im Kanal enthält:

   - einen Schritt (E4) der Bestimmung eines erwarteten Interferenzpegels abhängig von den gerade sendenden Knoten;
   - einen Schritt (E6) des Messens eines laufenden Interferenzpegels im Kanal;

   und bei dem der Sendeschritt durchgeführt wird, wenn die Differenz zwischen dem erwarteten Interferenzpegel und dem laufenden Interferenzpegel geringer als eine vorbestimmte Schwelle ist.

4. Empfangsverfahren durch einen Knoten (N1-N6) eines Kommunikationsnetzes (1), bei dem die Knoten mittels eines Kanals mit Trägerabfrage-Mehrfachzugriff miteinander kommunizieren, wobei das Verfahren enthält:

   - einen Schritt (F0) des Empfangs eines Signals, das mit einer gegebenen Sendeleistung und einem gegebenen Durchsatz im Kanal von einen Sendeknoten kommend gesendet wird, wobei die Sendeleistung nacheinander einen ersten Leistungswert während einer ersten Dauer, dann einen zweiten Leistungswert während einer zweiten Dauer annimmt, wobei die zwei Leistungswerte unterschiedlich sind;
   - einen Schritt (F12) der Bestimmung, ausgehend vom empfangenen Signal, der ersten und der zweiten Dauer;
   - einen Schritt (F14) der Bestimmung der Sendeleistung und des Durchsatzes, die vom Sendeknoten verwendet werden, ausgehend von den zwei bestimmten Dauern.

5. Empfangsverfahren nach Anspruch 4, das außerdem einen Schritt (F12) der Bestimmung des Sendeknotens ausgehend von einer Differenz zwischen der ersten und der zweiten Leistung und einer Dämpfung enthält, die mit der Ausbreitung des Signals zwischen dem Knoten des Netzes und den anderen Knoten des Netzes verbunden ist.

6. Empfangsverfahren nach Anspruch 4, das außerdem einen Schritt (F28) der Decodierung einer Quittierung, die von dem Zielknoten des Signals an den Sendeknoten geschickt wird, und einen Schritt (F30) der Bestimmung einer Dämpfung enthält, die mit der Ausbreitung des Signals zwischen dem Knoten des Netzes und dem Zielknoten verbunden ist.

7. Sendemodul (100) eines Knotens eines Kommunikationsnetzes, bei dem die Knoten mittels eines Kanals mit Trägerabfrage-Mehrfachzugriff miteinander kommunizieren, wobei die Vorrichtung enthält:

   - Einrichtungen (102) zum Senden eines Signals mit einer gegebenen Sendeleistung und einem gegebenen Durchsatz im Kanal an einen Empfangsknoten,

**dadurch gekennzeichnet, dass** die Sendeeinrichtungen geeignet sind, um die Sendeleistung des gesendeten Signals nacheinander zwischen einem ersten Leistungswert während einer ersten Dauer und einem zweiten Leistungswert während einer zweiten Dauer variieren zu lassen,
wobei die zwei Leistungswerte unterschiedlich sind und einer von ihnen gleich der gegebenen Leistung ist, wobei die erste Dauer für die gegebene Leistung repräsentativ ist und wobei die zweite Dauer für den Durchsatz repräsentativ ist.

8. Empfangsmodul (100) eines Knotens eines Kommunikationsnetzes, bei dem die Knoten mittels eines Kanals mit Trägerabfrage-Mehrfachzugriff miteinander kommunizieren, wobei die Vorrichtung enthält:

   - Einrichtungen (102) zum Empfang eines Signals, das mit einer gegebenen Sendeleistung und mit einem gegebenen Durchsatz im Kanal von einen Sendeknoten kommend gesendet wird, wobei die Sendeleistung nacheinander einen ersten Leistungswert während einer ersten Dauer, dann einen zweiten Leistungswert während einer zweiten Dauer annimmt, wobei die zwei Leistungswerte unterschiedlich sind;
   - Einrichtungen (107) zur Bestimmung, ausgehend vom empfangenen Signal, der ersten und zweiten Dauern;
   - Einrichtungen (108) zur Bestimmung einer Sendeleistung und eines Durchsatzes, die vom Sendeknoten verwendet werden, ausgehend von den zwei bestimmten Dauern.

9. Sendeknoten (N1-N6) eines Kommunikationsnetzes (1), bei dem Knoten mittels eines Kanals mit Trägerabfrage-Mehrfachzugriff miteinander kommunizieren, der ein Sendemodul nach Anspruch 7 enthält.

10. Empfangsknoten (N1-N6) eines Kommunikationsnetzes (1), bei dem Knoten mittels eines Kanals mit Trägerabfrage-Mehrfachzugriff miteinander kommunizieren, der ein Empfangsmodul nach Anspruch 8 enthält.

11. Kommunikationssystem, bei dem Knoten mittels eines Kanals mit Trägerabfrage-Mehrfachzugriff miteinander kommunizieren, das mindestens einen Knoten nach Anspruch 9 und mindestens einen Knoten nach Anspruch 10 enthält.

12. Computerprogramm, das Anweisungen zur Anwendung des Sendeverfahrens durch einen Knoten eines Kommunikationsnetzes aufweist, bei dem Knoten mittels eines Kanals mit Trägerabfrage-Mehrfachzugriff nach Anspruch 1 miteinander kommunizieren, wenn dieses Programm von einem Prozessor ausgeführt wird.

13. Computerprogramm, das Anweisungen zur Anwendung des Empfangsverfahrens durch einen Knoten eines Kommunikationsnetzes aufweist, bei dem Knoten mittels eines Kanals mit Trägerabfrage-Mehrfachzugriff nach Anspruch 4 miteinander kommunizieren, wenn dieses Programm von einem Prozessor ausgeführt wird.

14. Signal, das von einem Knoten eines Kommunikationsnetzes gesendet wird, bei dem die Knoten mittels eines Kanals mit Trägerabfrage-Mehrfachzugriff miteinander kommunizieren, wobei das Signal mit einer gegebenen Sendeleistung und einem gegebenen Durchsatz im Kanal an einen Empfangsknoten gesendet wird;
**dadurch gekennzeichnet, dass** die Sendeleistung des gesendeten Signals nacheinander einen ersten Leistungswert während einer ersten Dauer, dann einen zweiten Leistungswert während einer zweiten Dauer annimmt, wobei die zwei Leistungswerte unterschiedlich sind und einer von ihnen gleich der gegebenen Leistung ist, wobei die erste Dauer für die gegebene Leistung repräsentativ ist und wobei die zweite Dauer für den Durchsatz repräsentativ ist.

Fig. 1

Fig. 2

Fig. 5

Fig. 3

Fig. 4a

F24

Rec(ACK)

F26

Dec(ACK)

F28

Upd(R,Z)

F30

?Z

F32

F6

Enq(Z)

F34

F6

Fig. 4b

**EP 2 294 875 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T-S KIM et al.** Improving Spatial Reuse through Tuning Transmit Power, Carrier Sense Threshold, and Data rate in Multihop Wireless Networks. *conférence MobiCom'06,* Septembre 2006